# EUROPÄISCHE PATENTSCHRIFT

(11) **EP 1 520 755 B1**
(45) Veröffentlichungstag und Bekanntmachung des Hinweises auf die Patenterteilung: **22.03.2006**
(21) Anmeldenummer: 04077628.8
(22) Anmeldetag: 20.09.2004
(51) Int. Cl.: B60R 21/20

(54) **Anordnung zur Befestigung eines Gassacks in einem Fahrer-Airbagmodul**
Mounting arrangement for an airbag in an airbag module
Agencement de montage d'un coussin gonflable dans un module d'airbag

(30) Priorität: 30.09.2003 DE 20315347 U
(43) Veröffentlichungstag der Anmeldung: 06.04.2005
(73) Patentinhaber: Takata-Petri AG, 63743 Aschaffenburg (DE)
(72) Erfinder: Laue, Andreas, 63820 Elsenfeld (DE)
(74) Vertreter: Baumgärtel, Gunnar

(56) Entgegenhaltungen:
- EP-A- 1 113 948
- DE-A- 4 233 751
- DE-C- 3 939 021
- US-B1- 6 250 665

## Beschreibung

Die Erfindung betrifft eine Anordnung zur Befestigung eines Gassacks in einem Fahrer-Airbagmodul nach dem Oberbegriff des Anspruchs 1 wie z. B. aus DE 3 939 021 bekannt ist.

Aus dem europäischen Patent 1 113 948 B1 ist ein Airbagmodul mit Schwingungstilger für ein Lenkrad bekannt. Bei diesem Airbagmodul sind auf einem waagerechten Abschnitt des Modulgehäuses ein Diffusor und ein Gassack mittels Schrauben befestigt. Dabei liegt der Gassackmund flach zwischen diesem waagerechten Abschnitt und dem Diffusor und wird durch die Schrauben zwischen beiden geklemmt. Um ein Ausreißen des Gassackmundes beim Entfalten des Gassacks zu verhindern, müssen die Durchbrüche für die Schrauben im Gassack verstärkt ausgeführt werden. Weiterhin sind hohe Mutteranzugsmomente erforderlich, um eine sichere Klemmung zu erreichen. Das erfordert eine große Materialstärke und eine Vielzahl von Schrauben, wodurch diese Anordnungen schwer sind und einen erheblichen Montageaufwand erfordern.

Weiterhin ist aus der deutschen Offenlegungsschrift 42 33 751 A1 ein Insassenrückhaltesystem bekannt, bei dem der Gassack an einem Gehäuse mittels Profilleisten befestigt ist, die in komplementären Gegenprofilen am Gehäuse formschlüssig einsetzbar sind, so daß an diesen Befestigunsstellen Befestigungsschrauben entfallen können. Diese Profilleisten können in einer Seitwärtsrichtung bezüglich ihrer Längsachse am Gegenprofil verrastet bzw. verriegelt werden oder in Längsrichtung in das Gegenprofil eingeschoben werden. Dadurch werden Montagekosten und Gewicht durch den Wegfall der Befestigungsschrauben eingespart.

Diese Anordnung ist jedoch nur für Beifahrer-Airbags geeignet, da das Verrasten bzw. Verriegeln in Seitwärtsrichtung zunächst eine seitliche Verschiebung über das Gegenprofil hinweg erfordert, um dann anschließend in dieses eingedrückt zu werden. Das ist bei einem Beifahrer-Airbagmodul möglich, bei dem das Gehäuse in der Regel ein rechteckige Öffung für die Aufnahme des Einblasmundes des Airbags aufweist. Da der Gassack dehnbar ist, können deshalb zwei in Richtung der Längsseiten der Gehäuseöffnung verlaufende Profilleisten leicht über das Gegenprofil am Gehäuse bewegt werden. Die Befestigung des Gassacks an den Schmalseiten des Gehäuses erfolgt dann in herkömmlicher Weise mittels Bolzen oder Stiften.

Da das Gehäuse eines Fahrer-Airbagmoduls wegen des meist zylindrischen Gasgenerators auch einen kreisrunde Öffnung aufweist, an der der Gassack befestigt werden muß, muß auch der Einblasmund des Gassacks kreisförmig sein. Das Profil müßte deshalb ebenfalls ein geschlossener starrer Kreisring sein, so daß ein seitliches Verschieben über das Gegenprofil am Gehäuse nicht möglich ist.

Aber auch ein Einschieben des Profils in dessen Längsrichtung ist wegen der Kreisringform nicht möglich.

Der Erfindung liegt die Aufgabe zugrunde, die Gassackbefestigung in einem Fahrerairbagmodul so zu verändern, daß Gewicht und Montagekosten eingespart werden und daß die Gassack-Klemmkraft reduziert werden kann.

Erfindungsgemäß wird das gemäß den Merkmalen des Anspruchs 1 erreicht.

Bei einer Anordnung zur Befestigung eines Gassacks in einem Fahrer-Airbagmodul, in dem der Gassack mittels einer Klemmverbindung befestigt ist, insbesondere für ein Airbagmodul mit Schwingungstilger, ist im Bereich der Klemmverbindung mindestens ein formschlüssiger Verbindungsabschnitt vorgesehen. Durch die Kombination der Klemmverbindung mit einer formschlüssigen Verbindung im Bereich der Klemmverbindung ist es einerseits möglich, die formschlüssige Verbindung so zu gestalten, daß sie auch bei kreisrunder Einblasöffnung des Gassacks und entsprechender Öffnung im Modulgehäuse leicht montierbar ist und andererseits können wegen des Formschlusses die Klemmkräfte verringert werden, d.h., es sind weniger Verbindungsschrauben erforderlich. Da der Gassack nicht allein durch Formschluß am Gehäuse gehalten wird, sondern zusätzlich durch die Klemmkräfte, sind die Gestaltungsmöglichkeiten für die formschlüssige Verbindung vielfältig.

Die formschlüssige Klemmverbindung ist vorzugsweise zwischen einem Generatorträger und einem Diffusor des Airbagmoduls vorgesehen.

Erfindungsgemäβ ist im Generatorträger mindestens eine Vertiefung für mindestens einen am Gassack vorhandenen Vorsprung vorgesehen, wobei die Vertiefung so ausgebildet ist, daß der Vorsprung zumindest bei Belastung in Zugrichtung des Gassacks bei dessen Entfaltung an einer Wand der Vertiefung anliegt. Der Vorteil besteht darin, daß wegen der zusätzlichen Klemmung eine einfache Vertiefung, z. B. Nut oder Rille ausreicht, um einen Formschluß zu erzielen. Da die Klemmung nur die Aufgabe hat, das Herausrutschen des Vorsprungs des Gassacks aus der Vertiefung im Falle der Entfaltung des Gassacks zu verhindern, können die Klemmkräfte wesentlich geringer sein, als bei einer reinen kraftschlüssigen Befestigung des Gassacks. Andererseits ist wegen der möglichen einfachen Form der Vertiefung das Einlegen des Vorsprungs des Gassacks in die Vertiefung einfach. Durch die Verringerung der Klemmkräfte wird die Funktionsbeeinträchtigung des Gasgenerators als Schwingungstilger verhindert.

Es reicht aus, daß die Vertiefung an der Seite, an der der Vorsprung bei Entfaltung des Gassacks anliegt, eine zumindest annähernd senkrecht bezüglich der Zugrichtung des Gassacks verlaufende Wand aufweist.

Es ist zweckmäßig, mindestens eine umlaufende Vertiefung vorzusehen, die entsprechend der Gehäuseöffnung für die Aufnahme des Einblasmundes des Gassacks verläuft. In einer weiteren Ausgestaltung sind zwei konzentrisch verlaufende Vertiefungen vorgesehen. Die umlaufende Vertiefung kann auch mindestens eine Unterbrechung aufweisen, z.B. für den Angußpunkt des Generatorträgers.

Die Vertiefungen sind vorzugsweise auf der Auflagefläche für Befestigungsbolzen für die Klemmung des Gassacks vorgesehen.

In einer Ausführung sind Vertiefungen um Befestigungsbolzen herum für die Klemmung des Gassacks vorgesehen.

Als Vorsprung ist in einer Ausführungsform mindestens eine am Rand des Einblasmundes des Gassacks vorhandene Naht vorgesehen. Der Formschluß zwischen der Naht und der Vertiefung reicht wegen der zusätzlich vorgesehenen Klemmkraft aus, um den Gassack bei seiner Entfaltung sicher zu halten.

Als Vorsprung kann aber auch mindestens ein mit dem Gassack verbundenes Bauteil vorgesehen sein, das vorzugsweise ein kreisringförmiges Profil aufweist. Der Vorteil der Erfindung ist, daß sich ein solches Profil, selbst wenn es starr ist, bei der Montage des Gassacks wegen der einfachen Vertiefung leicht in diese einlegen läßt.

In einer weiteren Ausgestaltung der Erfindung ist vorgesehen, daß der Generatorträger innerhalb des Diffusors einen in dessen Richtung weisenden Schutzrand aufweist, wobei sich der Rand des Einblasmundes mindestens bis in einen Spalt zwischen dem Schutzrand und dem Diffusor erstreckt. Dadurch wird der Gassack, insbesondere im Bereich der Vorsprünge am Gassack, vor dem direkten Gasstrahl aus dem Gasgenerator geschützt, so daß eine thermische Versiegelung der Gewebekante des Einblasmundes entfallen kann.

Die Erfindung soll in Ausführungsbeispielen anhand von Zeichnungen erläutert werden. Es zeigen:
- Fig. 1: Querschnitte durch je einen Abschnitt eines Generatorträgers und durch einen Diffusorabschnitt;
- Fig. 2: die Einzelheit A der Fig. 1 mit einer ersten Ausführungsform der Gassackbefestigung;
- Fig. 3: die Einzelheit B der Fig. 1 mit einer zweiten Ausführungsform der Gassackbefestigung.

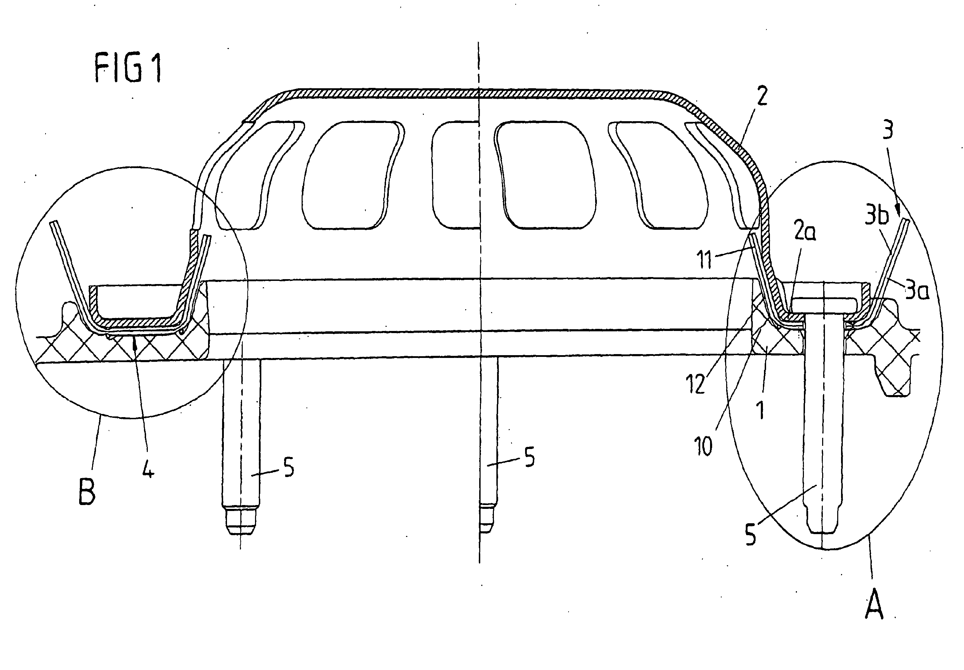

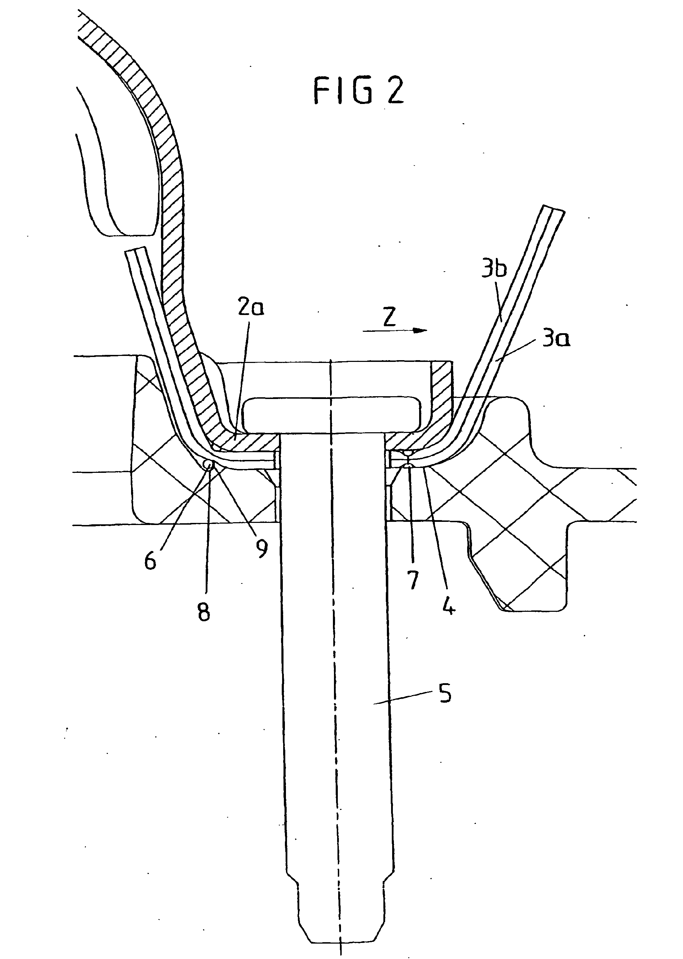

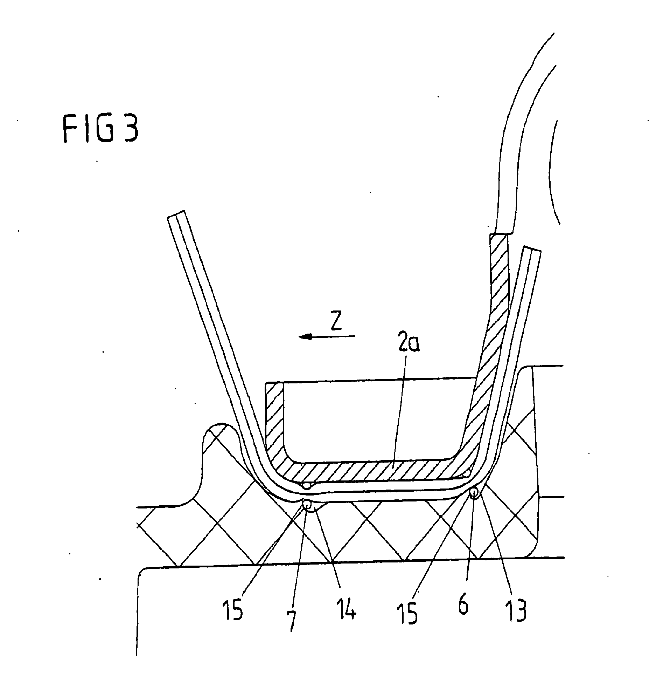

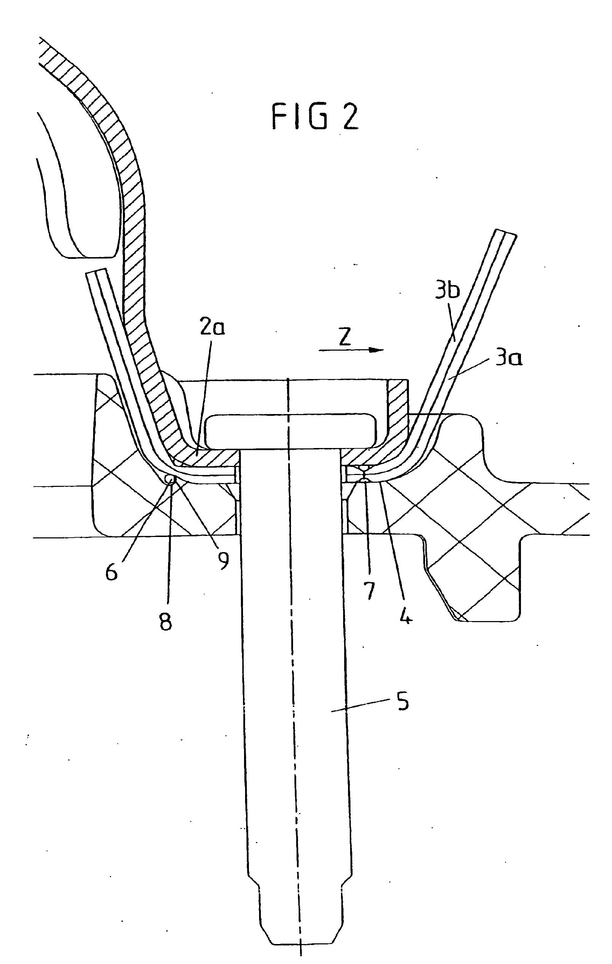

In der Fig. 1 ist jeweils ein Abschnitt eines Generatorträgers 1 dargestellt, über den sich ein Diffusor 2 erstreckt. Zwischen beiden liegt der Rand 11 des Einblasmundes eines Gassacks 3 auf der Auflagefläche 4 für Befestigungsbolzen 5. Der Gassack 3 weist in diesem Bereich zwei Lagen 3a, b auf. Der Gassack kann in diesem Bereich aber auch weitere Lagen aufweisen. Am Rand 11 des Einblasmundes des Gassacks verlaufen konzentrische Nähte 6, 7 (Fig. 2, 3). Der Generatorträger weist einen Schutzrand 10 auf und der Rand 11 des Gassackmundes erstreckt sich durch einen Spalt 12 zwischen dem Schutzrand 10 und dem Diffusor 2 in diesen hinein. Der Schutzrand bewirkt, daß die heißen Gase des nicht dargestellten Gasgenerators den Bereich des Randes 11 mit der Naht 6 nicht erreichen.

In der ersten Ausführungsform, die links der Mittellinie in der Fig. 1 sowie in der Fig 2 dargestellt ist, weist die Auflagefläche 4 eine Vertiefung 8 auf, die entsprechend der Naht 6 verläuft, d.h. eine umlaufende Nut darstellt. Diese Nut kann aber auch teilweise umlaufend sein, sofern die Naht ebenfalls entsprechend ausgebildet ist. Diese Vertiefung weist eine Wand 9 auf, die senkrecht bezüglich der Zugrichtung Z verläuft, in die der Gassack bei seiner Entfaltung gezogen wird. Durch Anziehen der Befestigungsbolzen 5 wird die Naht 6 auf der Seite der Gassacklage 3a in die Vertiefung 8 gedrückt. Auf der Seite der Gassacklage 3b wird die Naht 6 wegen des Fehlens einer entsprechenden Vertiefung im Diffusor 2 in diese Gassacklage gedrückt. Die Naht 7 wird bei beiden Gassacklagen 3a, b wegen des Fehlens von Vertiefungen im Generatorträger 1 und im Diffusor 2 in diese Gassacklagen gedrückt.

Der Gassack 3 wird bei seiner Entfaltung im Bereich der Auflagefläche 4 in Z-Richtung beansprucht. Dadurch wird die Naht 6 an die Wand 9 gedrückt. Durch diesen Formschluß wird das Herausziehen des Gassacks 3 aus seiner Befestigung verhindert. Der Anpreßdruck der Befestigungsbolzen 5 muß lediglich so groß sein, daß das Herausrutschen der Naht 6 aus der Vertiefung 8 verhindert wird.

Bei der zweiten Ausführungsform, die rechts der Mittellinie der Fig. 1 sowie in der Fig. 3 dargestellt ist, sind in der Auflagefläche 4 zwei umlaufende Vertiefungen 13, 14 vorgesehen, die jeweils eine Wand 15 bzw. 16 aufweisen, die senkrecht bezüglich der Zugrichtung Z verlaufen, in die der Gassack bei seiner Entfaltung gezogen wird. Wie bei der ersten Ausführungsform können auch bei dieser Ausführungsform die Vertiefungen teilweise umlaufend sein. Die Naht 6 liegt in der Vertiefung 13 und zusätzlich die Naht 7 in der Vertiefung 14. Damit wird mit größerer Sicherheit das Herausreißen des Gassacks aus der Befestigung verhindert.

Anstelle der Nähte 6, 7 können auch feste Ringe am Gassack angebracht, z.B. angenäht, sein, die bei der vorgesehenen Form der Vertiefungen problemlos in diese eingelegt werden können.

Weiterhin können die Vertiefungen um die Befestigungsbolzen 5 herum verlaufen, denen Nähte am Gassack bzw. denen die mit dem Gassack verbundenen festen Ringe zugeordnet sind.

Infolge der Klemmwirkung des auf dem Rand 11 des Einblasmundes aufliegenden Diffusorrandes 2a sind bei dieser kombinierten form- und kraftschlüsigen Klemmung wesentlich weniger Befestigungsbolzen erforderlich als bei einer rein kraftschlüssigen Klemmung des Gassacks. 3 bis 4 Befestigungsbolzen sind für eine sichere Klemmung ausreichend.

## Patentansprüche

1. Anordnung zur Befestigung eines Gassacks in einem Fahrer-Airbagmodul, in dem der Gassack mittels einer Klemmverbindung befestigt ist, wobei im Bereich der Klemmverbindung mindestens ein formschlüssiger Verbindungsabschnitt vorgesehen ist, insbesondere für ein Airbagmodul mit Schwingungstilger,
**dadurch gekennzeichnet, dass** in einem Generatorträger (1) mindestens eine Vertiefung (8) für mindestens einen am Gassack vorhandenen Vorsprung (6) vorgesehen ist, wobei die Vertiefung (8) so ausgebildet ist, dass der Vorsprung (6) zumindest bei Belastung in Zugrichtung (Z) des Gassacks (3) bei dessen Entfaltung an einer Wand (9) der Vertiefung (8) anliegt

2. Anordnung nach Anspruch 1, **dadurch gekennzeichnet, dass** die formschlüssige Klemmverbindung zwischen dem Generatorträger (1) und einem Diffusor (2) des Airbagmoduls vorgesehen ist.

3. Anordnung nach Anspruch 1 oder 2, **dadurch gekennzeichnet, daß** die Vertiefung (8) an der Seite, an der der Vorsprung (6) bei Entfaltung des Gassacks (3) anliegt, eine zumindest annähernd senkrecht bezüglich der Zugrichtung (Z) des Gassacks (3) verlaufende Wand (9) aufweist.

4. Anordnung nach mindestens einem der Ansprüche 1 bis 3, **dadurch gekennzeichnet, daß** mindestens eine umlaufende Vertiefung (8) vorgesehen ist.

5. Anordnung nach Anspruch 4, **dadurch gekennzeichnet, daß** zwei konzentrisch verlaufende Vertiefungen (13, 14) vorgesehen sind.

6. Anordnung nach Anspruch 4 oder 5, **dadurch gekennzeichnet, daß** die umlaufende Vertiefung mindestens eine Unterbrechung aufweist.

7. Anordnung nach mindestens einem der vorhergehenden Ansprüche, **dadurch gekennzeichnet, dass** die Vertiefungen auf der Auflagefläche (4) für Befestigungsbolzen (5) für die Klemmung des Gassacks (3) vorgesehen sind.

8. Anordnung nach mindestens einem der vorhergehenden Ansprüche, **dadurch gekennzeichnet, dass** Vertiefungen um die Befestigungsbolzen (5) herum für die Klemmung des Gassacks (3) vorgesehen sind.

9. Anordnung nach mindestens einem der vorhergehenden Ansprüche, **dadurch gekennzeichnet, dass** als Vorsprung mindestens eine am Rand (11) eines Einblasmundes des Gassacks (3) vorhandene Naht (6, 7) vorgesehen ist.

10. Anordnung nach mindestens einem der vorhergehenden Ansprüche, **dadurch gekennzeichnet, dass** als Vorsprung mindestens ein mit dem Gassack (3) verbundenes Bauteil vorgesehen ist.

11. Anordnung nach Anspruch 10, **dadurch gekennzeichnet, dass** das Bauteil ein kreisringförmiges Profil aufweist.

12. Anordnung nach mindestens einem der vorhergehenden Ansprüche, **dadurch gekennzeichnet; dass** der Generatorträger (1) innerhalb des Diffusors (2) einen in dessen Richtung weisenden Schutzrand (10) aufweist, wobei sich der Rand (11) des Einblasmundes mindestens bis in einen Spalt (12) zwischen dem Schutzrand (10) und dem Diffusor (2) erstreckt.

## Claims

1. Arrangement for fastening an airbag in a driver's airbag module in which the airbag is fastened by means of a clamping connection, at least one form-fitting connecting section being provided in the region of the clamping connection, in particular for an airbag module with a vibration damper, **characterized in that** at least one depression (8) for at least one projection (6) present on the airbag is provided in a generator support (1), the depression (8) being designed in such a manner that the projection (6), at least when loaded in the tensioning direction (Z) of the airbag (3), bears against a wall (9) of the depression (8) when the airbag is deployed.

2. Arrangement according to Claim 1, **characterized in that** the form-fitting clamping connection is provided between a generator support (1) and a diffuser (2) of the airbag module.

3. Arrangement according to Claim 1 or 2, **characterized in that** the depression (8) has, on the side against which the projection (6) bears when the airbag (3) is deployed, a wall (9) running at least approximately perpendicularly with respect to the tensioning direction (Z) of the airbag (3).

4. Arrangement according to at least one of Claims 1 to 3, **characterized in that** at least one encircling depression (8) is provided.

5. Arrangement according to Claim 4, **characterized in that** two depressions (13, 14) running concentrically are provided.

6. Arrangement according to Claim 4 or 5, **characterized in that** the encircling depression has at least one interruption.

7. Arrangement according to at least one of the preceding claims, **characterized in that** the depressions are provided on the supporting surface (4) for fastening bolts (5) for the clamping of the airbag (3).

8. Arrangement according to at least one of the preceding claims, **characterized in that** depressions are provided around the fastening bolts (5) for the clamping of the airbag (3).

9. Arrangement according to at least one of the preceding claims, **characterized in that** at least one seam (6, 7) which is present on the edge (11) of a blow-in mouth of the airbag (3) is provided as the projection.

10. Arrangement according to at least one of the preceding claims, **characterized in that** at least one component which is connected to the airbag (3) is provided as the projection.

11. Arrangement according to Claim 10, **characterized in that** the component has a circular ring-shaped profile.

12. Arrangement according to at least one of the preceding claims, **characterized in that** the generator support (1) has, within the diffuser (2), a protective edge (10) pointing in the direction thereof, the edge (11) of the blow-in mouth extending at least as far as a gap (12) between the protective edge (10) and the diffuser (2).

## Revendications

1. Agencement pour la fixation d'un sac à gaz dans un module de coussin gonflable de conducteur, dans lequel le sac à gaz est fixé au moyen d'une liaison par serrage et, dans la région de la liaison de serrage, il est prévu au moins un tronçon de liaison par coopération de formes, en particulier pour un module de coussin gonflable avec amortisseur d'oscillations,
**caractérisé en ce qu'**il est prévu dans un support de générateur (1) au moins un renfoncement (8) pour au moins une saillie (6) se trouvant sur le sac à gaz, le renfoncement (8) étant réalisé de telle sorte que la saillie (6) vienne en appui sur une paroi (9) du renfoncement (8) en cas de sollicitation dans la direction de traction (Z) du sac à gaz (3) lors de son déploiement.

2. Agencement selon la revendication 1, **caractérisé en ce que** la liaison de serrage par coopération de formes est prévue entre le support de générateur (1) et un diffuseur (2) du module de coussin gonflable.

3. Agencement selon la revendication 1 ou 2, **caractérisé en ce que** le renfoncement (8) présente, sur le côté sur lequel est en appui la saillie (6) lors du déploiement du sac à gaz (3), une paroi (9) s'étendant au moins approximativement perpendiculairement à la direction de traction (Z) du sac à gaz (3).

4. Agencement selon au moins l'une des revendications 1 à 3, **caractérisé en ce qu'**il est prévu au moins un renfoncement (8) périphérique.

5. Agencement selon la revendication 4, **caractérisé en ce qu'**il est prévu deux renfoncements (13, 14) s'étendant de manière concentrique.

6. Agencement selon la revendication 4 ou 5, **caractérisé en ce que** le renfoncement périphérique présente au moins une interruption.

7. Agencement selon au moins l'une des revendications précédentes, **caractérisé en ce que** les renfoncement sont prévus sur la surface d'appui (4) pour des boulons de fixation (5) pour le serrage du sac à gaz (3).

8. Agencement selon au moins l'une des revendications précédentes, **caractérisé en ce que** des renfoncement sont prévus autour des boulons de fixation (5) pour le serrage du sac à gaz (3).

9. Agencement selon au moins l'une des revendications précédentes, **caractérisé en ce qu'**il est prévu en tant que saillie au moins une couture (6, 7) se trouvant sur le bord (11) d'une embouchure d'insufflation du sac à gaz (3).

10. Agencement selon au moins l'une des revendications précédentes, **caractérisé en ce qu'**il est prévu en tant que saillie au moins un composant relié au sac à gaz (3).

11. Agencement selon la revendication 10, **caractérisé en ce que** le composant présente un profil de forme circulaire et annulaire.

12. Agencement selon au moins l'une des revendications précédentes, **caractérisé en ce que** le support de générateur (1) présente à l'intérieur du diffuseur (2) un bord de protection (10) tourné dans sa direction, le bord (11) de l'embouchure d'insufflation s'étendant au moins jusque dans une fente (12) entre le bord de protection (10) et le diffuseur (2).
